# FASCICULE DE BREVET EUROPEEN

(11) **EP 2 640 583 B1**
(45) Date de publication et mention de la délivrance du brevet: **14.01.2015**
(21) Numéro de dépôt: 11781560.5
(22) Date de dépôt: 14.11.2011
(51) Int. Cl.: B60C 3/06, B60C 15/00

(54) **PNEUMATIQUE A BOURRELETS DISSYMETRIQUES.**
REIFEN MIT ASYMMETRISCHEM WULST
TIRE HAVING DISSYMMETRICAL BEADS

(30) Priorité: 18.11.2010 FR 1059469
(43) Date de publication de la demande: 25.09.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PIROTTE, Pascal, F-63040 Clermont-Ferrand Cedex 9 (FR); EGERSZEGI, Christophe, F-63040 Clermont-Ferrand Cedex 9 (FR)
(74) Mandataire: Sidhu, Alban
(86) Numéro de dépôt international: PCT/EP2011/070028
(87) Numéro de publication internationale: WO 2012/065939

(56) Documents cités:
- EP-A1- 2 090 445
- JP-A- 11 227 412
- JP-A- 2009 298 314

## Description

### DOMAINE DE L'INVENTION

La présente invention concerne les pneumatiques de tourisme et les ensembles pneumatique-roue comportant des pneumatiques de tourisme.

### ARRIERE-PLAN

Le comportement d'un véhicule équipé de pneumatiques de tourisme dépend d'une multitude de paramètres, à la fois du véhicule et des ensembles pneumatique-roue. Parmi ces paramètres, il y a le déport des roues par rapport au véhicule. En modifiant ce déport, on peut influencer, de manière significative, le comportement du véhicule et le ressenti du conducteur par rapport à ce comportement. Il est possible de modifier ce déport en changeant de modèle de roue ou en utilisant des cales positionnées entre la roue et le moyeux.

Dans le contexte d'une mise au point d'un pneumatique pour un véhicule donné, le changement de modèle de roue ou l'utilisation de telles cales ne sont pas toujours envisageables. En effet, plusieurs types ou marques de pneumatiques sont généralement susceptibles d'être montés sur ce véhicule. Or, le déport des roues permettant d'atteindre le comportement visé peut être différent suivant le type ou la marque des pneumatiques.

Un pneumatique selon la préambule de la revendication 1 est connu du document JP-A-2009-298314**.**

### RESUME DE L'INVENTION

Un des objectifs de la présente invention est de permettre une modification du déport d'un ensemble pneumatique-roue par rapport au véhicule sans modifier la roue ou utiliser des cales.

Cet objectif est atteint par une modification des bourrelets des pneumatiques utilisés dans de tels ensembles de manière à aboutir à un déplacement latéral de la bande de roulement.

Plus précisément, l'objectif est atteint par l'utilisation d'un pneumatique destiné à être monté sur une jante de montage creuse conforme aux normes ETRTO et ayant un code diamètre supérieur ou égal à 10 et inférieur ou égal à 20 et des crochets de type « B » ou « J », avec une hauteur de crochet G et un rayon de courbure R1, et gonflé à l'aide d'un gaz de gonflage, ce pneumatique comportant : un premier et un deuxième bourrelet, les deux bourrelets étant destinés à entrer en contact avec ladite jante de montage, chaque bourrelet ayant une surface extérieure, destinée à être en contact avec l'air atmosphérique, et une surface intérieure, destinée à être en contact avec le gaz de gonflage du pneumatique, chaque bourrelet comportant au moins une structure annulaire de renforcement, la structure annulaire de renforcement possédant, dans toute section radiale, au moins un point radialement le plus à l'intérieur, la distance radiale entre le point radialement le plus à l'intérieur de la structure annulaire de renforcement et la jante de montage étant désigné par A ; deux flancs prolongeant les bourrelets radialement vers l'extérieur, les deux flancs s'unissant dans un sommet comprenant une armature de sommet surmontée d'une bande de roulement ; et une armature de carcasse s'étendant depuis les bourrelets à travers les flancs jusqu'au sommet, l'armature de carcasse comportant une pluralité d'éléments de renforcement de carcasse et ancrée dans les deux bourrelets par un retournement autour de la structure annulaire de renforcement, de manière à former dans chaque bourrelet un brin aller et un brin retour.

Dans un pneumatique selon l'invention, le premier bourrelet a une épaisseur EB1 et le deuxième bourrelet a une épaisseur EB2, les épaisseurs EB1 et EB2 étant définies comme la distance séparant (i) le point du brin aller de l'armature de carcasse ayant une distance R dudit point radialement le plus à l'intérieur de la structure annulaire de renforcement du bourrelet, où R = G + R1/2 - A, et (ii) le point de la surface extérieure du bourrelet ayant cette même distance R dudit point radialement le plus à l'intérieur de la structure annulaire de renforcement du bourrelet, ces distances étant mesurées lorsque le pneumatique est monté sur ladite jante de montage et gonflé à sa pression de service.

Dans un pneumatique selon l'invention, la valeur absolue de la différence entre les épaisseurs EB1 et EB2 est supérieure ou égale à 1 mm, et de préférence supérieure ou égale à 3 mm. Préférentiellement, la différence entre les épaisseurs EB1 et EB2 est inférieure ou égale à 8 mm, et encore plus préférentiellement, inférieure ou égale à 6 mm.

La demanderesse a constaté qu'en utilisant de tels pneumatiques, on peut obtenir des déports de la bande de roulement du pneumatique par rapport au véhicule équivalents à ceux obtenus sur l'ensemble pneumatique-roue avec des cales d'une épaisseur de quelques millimètres. Ce constat est inattendu car on se serait attendu à ce que la position de la bande de roulement du pneumatique par rapport à sa jante de montage soit avant tout déterminé par la géométrie de son armature de carcasse sous l'effet de la pression de gonflage, et que l'épaisseur des bourrelets ne joue pas de rôle prépondérant dans le positionnement axial de la bande de roulement.

L'invention concerne également un ensemble pneumatique-roue comportant un tel pneumatique, c'est-à-dire un ensemble pneumatique-roue, comportant : une roue comportant une jante de montage creuse conforme aux normes ETRTO et ayant un code diamètre supérieur ou égal à 10 et inférieur ou égal à 20 et des crochets de type « B » ou « J », avec une hauteur de crochet G et un rayon de courbure R1 ; un pneumatique destiné à être monté sur ladite jante de montage et gonflé à l'aide d'un gaz de gonflage, le pneumatique comportant : un premier et un deuxième bourrelet, les deux bourrelets étant destinés à entrer en contact avec ladite jante de montage, chaque bourrelet ayant une surface extérieure, destinée à être en contact avec l'air atmosphérique, et une surface intérieure, destinée à être en contact avec le gaz de gonflage du pneumatique, chaque bourrelet comportant au moins une structure annulaire de renforcement, la structure annulaire de renforcement possédant, dans toute section radiale, au moins un point radialement le plus à l'intérieur, la distance radiale entre le point radialement le plus à l'intérieur de la structure annulaire de renforcement et la jante de montage étant désigné par A ; deux flancs prolongeant les bourrelets radialement vers l'extérieur, les deux flancs s'unissant dans un sommet comprenant une armature de sommet surmontée d'une bande de roulement ; une armature de carcasse s'étendant depuis les bourrelets à travers les flancs jusqu'au sommet, l'armature de carcasse comportant une pluralité d'éléments de renforcement de carcasse et ancrée dans les deux bourrelets par un retournement autour de la structure annulaire de renforcement, de manière à former dans chaque bourrelet un brin aller et un brin retour ; dans lequel le premier bourrelet a une épaisseur EB1 et le deuxième bourrelet a une épaisseur EB2, les épaisseurs EB1 et EB2 étant définies comme la distance séparant (i) le point du brin aller de l'armature de carcasse ayant une distance R dudit point radialement le plus à l'intérieur de la structure annulaire de renforcement du bourrelet, où R = G + R1/2 - A, et (ii) le point de la surface extérieure du bourrelet ayant cette même distance R dudit point radialement le plus à l'intérieur de la structure annulaire de renforcement du bourrelet, et dans lequel la valeur absolue de la différence entre les épaisseurs EB1 et EB2 est supérieure ou égale à 1 mm, et de préférence supérieure ou égale à 3 mm.

### BREVE DESCRIPTION DES DESSINS

La figure 1 représente un pneumatique selon l'art antérieur.
La figure 2 représente une vue en perspective partielle d'un pneumatique selon l'art antérieur.
La figure 3 représente, en coupe radiale, une portion d'un ensemble pneumatique-roue comportant un pneumatique de référence ayant des bourrelets symétriques.
Les figures 4 et 5 représentent, en coupe radiale, une portion d'un ensemble pneumatique-roue comportant un pneumatique selon l'invention.
La figure 6 montre un extrait du « Standard Manual 2010 » de l'ETRTO.
Les figures 7 à 9 illustrent l'effet obtenu par l'utilisation d'un pneumatique selon l'invention.

### DESCRIPTION DETAILLEE DE L'INVENTION

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial(e) » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet. Lorsqu'il est dit que le plan médian sépare, dans toute section radiale, le pneumatique en deux « moitiés » de pneumatique, cela ne veut pas dire que le plan médian constitue nécessairement un plan de symétrie du pneumatique. L'expression « moitié de pneumatique » a ici une signification plus large et désigne une portion du pneumatique ayant une largeur axiale proche de la moitié de la largeur axiale du pneumatique.

Une direction « circonférentielle » est une direction qui est perpendiculaire à la fois à un rayon du pneumatique et à la direction axiale.

Dans le cadre de ce document, l'expression « composition caoutchouteuse » désigne une composition de caoutchouc comportant au moins un élastomère et une charge.

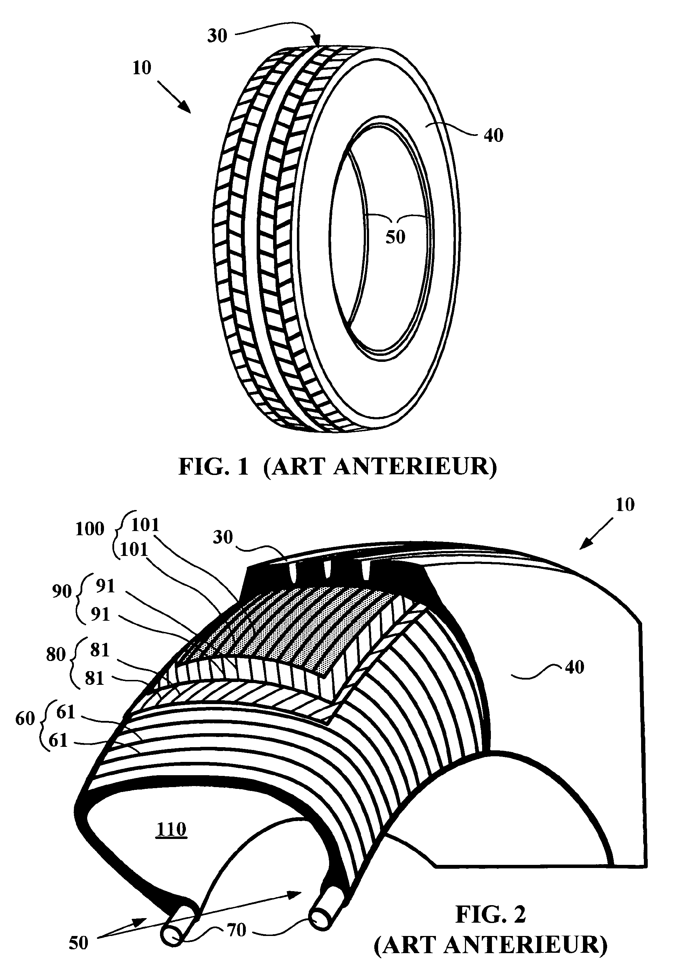

La figure 1 représente schématiquement un pneumatique 10 selon l'art antérieur. Le pneumatique 10 comporte un sommet comprenant une armature de sommet (invisible à la figure 1) surmontée d'une bande de roulement 30, deux flancs 40 prolongeant le sommet radialement vers l'intérieur, ainsi que deux bourrelets 50 radialement intérieurs aux flancs 40.

La figure 2 représente schématiquement une vue en perspective partielle d'un autre pneumatique 10 selon l'art antérieur et illustre les différentes composantes du pneumatique. Le pneumatique 10 comprend une armature de carcasse 60 constituée de fils 61 enrobés de composition caoutchouteuse, et deux bourrelets 50 comportant chacun des armatures de renforcement circonférentielles 70 (ici, des tringles) qui maintiennent le pneumatique 10 sur la jante (non représentée). L'armature de carcasse 60 est ancrée dans chacun des bourrelets 50. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 30 est posée sur l'armature de frettage ; c'est cette bande de roulement 30 qui assure le contact du pneumatique 10 avec la route. Le pneumatique 10 représenté est un pneu « tubeless » : il comprend une « gomme intérieure » 110 en composition caoutchouteuse imperméable au gaz de gonflage, recouvrant la surface intérieure du pneumatique.

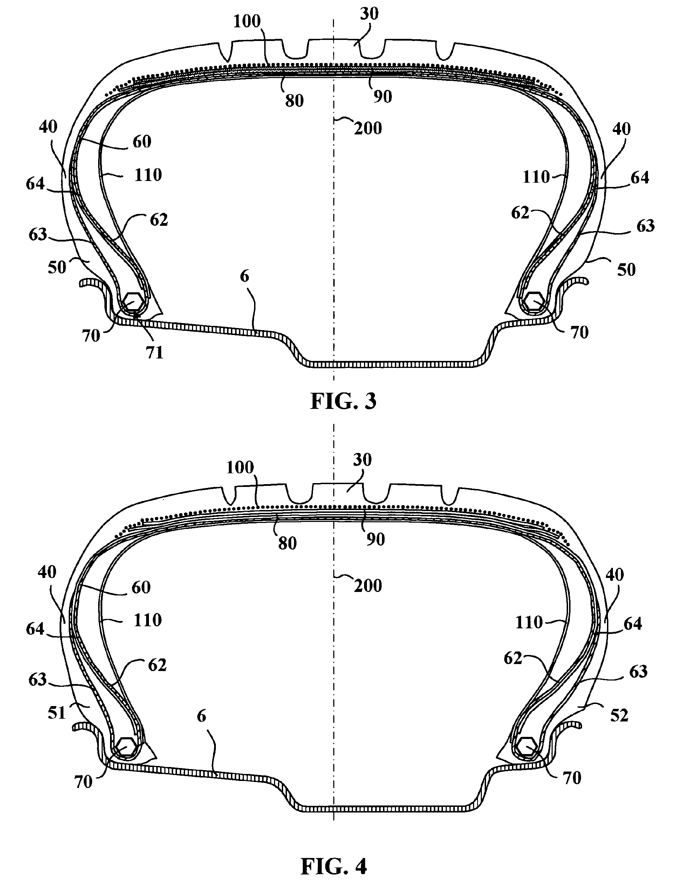

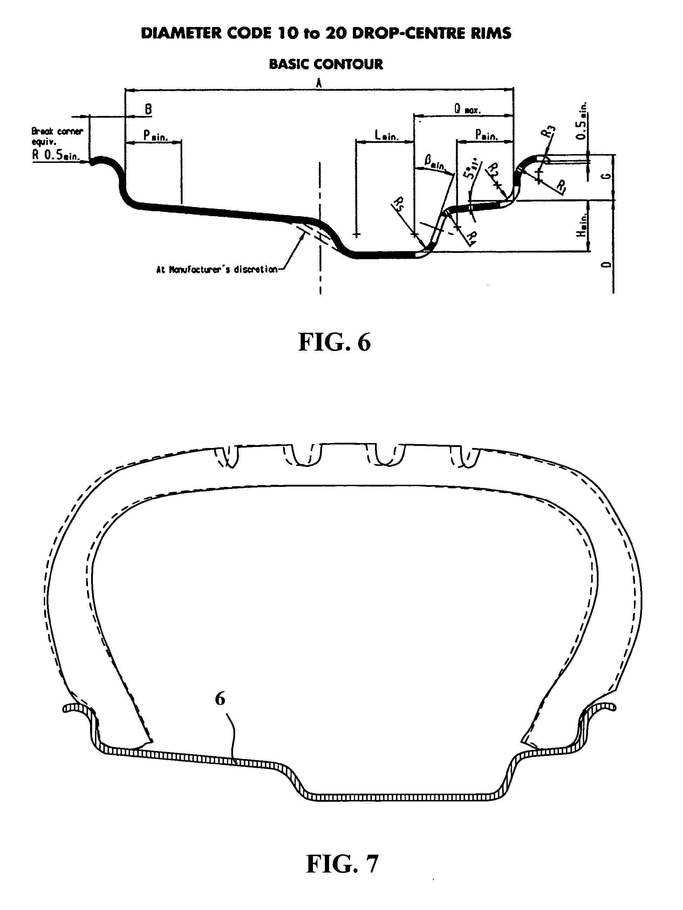

La figure 3 représente, en coupe radiale, une portion d'un ensemble pneumatique-roue comportant un pneumatique de référence. Le pneumatique est monté sur une jante de montage 6 creuse conforme aux normes de l'ETRTO (European Tyre and Rim Techncal Organisation ; Organisation Technique Européene du Pneumatique et de la Jante). Il s'agit d'une jante creuse ayant un code diamètre supérieur ou égal à 10 et inférieur ou égal à 20 (« diameter code 10 to 20 Drop-Centre Rim ») telle que présentée dans le « Standards Manual 2010 » de l'ETRTO aux pages R8 et suivantes. La jante en question a des crochets avec une hauteur de crochet G et un rayon de courbure R1. La définition précise de ces paramètres est visible à la figure 6, qui est extraite de la page R8 du « Standards Manual 2010 ». Pour les différences entre les crochets de type « B » et « J », le lecteur est renvoyé au tableau à la page R9 du « Standards Manual 2010 » de l'ETRTO.

Le pneumatique comporte deux bourrelets 50 symétriques destinés à entrer en contact avec ladite jante de montage 6, chaque bourrelet 50 ayant une surface extérieure, destinée à être en contact avec l'air atmosphérique, et une surface intérieure, destinée à être en contact avec le gaz de gonflage du pneumatique. Chaque bourrelet 50 comporte au moins une structure annulaire de renforcement 70, la structure annulaire de renforcement possédant, dans toute section radiale, au moins un point 71 radialement le plus à l'intérieur. Précisons que lorsque le bourrelet comporte plusieurs structures annulaires de renforcement 70, on considérera le point 71 radialement le plus à l'intérieur de l'ensemble formé par les différentes structures annulaires de renforcement. Lorsque plusieurs points de la (des) structure(s) annulaire(s) de renforcement 70 ont la même distance radiale minimale de l'axe de rotation du pneumatique, on considérera l'un quelconque de ces points.

Le pneumatique comporte également deux flancs 40 prolongeant les bourrelets radialement vers l'extérieur, les deux flancs s'unissant dans un sommet comprenant une armature de sommet formée par les nappes 80 et 90 et surmontée par une armature de frettage 100 et une bande de roulement 30. Le plan médian du pneumatique est indiqué par la référence 200.

Le pneumatique comporte également une armature de carcasse 60 s'étendant depuis les bourrelets 50 à travers les flancs 40 jusqu'au sommet. L'armature de carcasse 60 est ancrée dans les deux bourrelets par un retournement autour de la structure annulaire de renforcement 70, de manière à former dans chaque bourrelet un brin aller 62 et un brin retour 63. En l'occurrence, l'armature de carcasse 60 comporte en outre une deuxième couche 64 qui s'étend également depuis les bourrelets 50 à travers les flancs 40 jusqu'au sommet, mais qui n'est pas ancrée à la structure annulaire de renforcement 70 par un retournement.

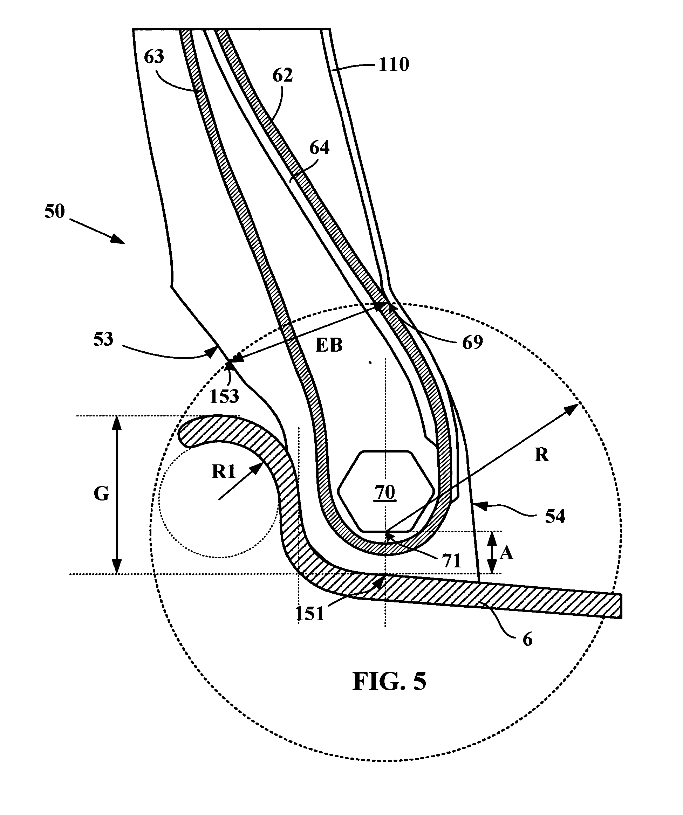

Les figures 4 et 5 représentent, en coupe radiale, une portion d'un ensemble pneumatique-roue comportant un pneumatique selon l'invention. Comme le pneumatique représenté à la figure 3, le pneumatique faisant partie de cet ensemble pneumatique-roue est destiné à être monté sur une jante de montage 6 creuse conforme aux normes ETRTO (« diameter code 10 to 20 Drop-Centre Rim ») ayant des crochets de type « J » avec une hauteur de crochet G et un rayon de courbure R1.

Le pneumatique comporte un premier bourrelet 51 et un deuxième bourrelet 52, les deux bourrelets 51 et 52 étant destinés à entrer en contact avec ladite jante de montage 6. Chaque bourrelet a une surface extérieure 53 (voir figure 5), destinée à être en contact avec l'air atmosphérique, et une surface intérieure 54 (voir figure 5), destinée à être en contact avec le gaz de gonflage du pneumatique. Chaque bourrelet comporte au moins une structure annulaire de renforcement 70 possédant, dans toute section radiale, au moins un point 71 radialement le plus à l'intérieur, la distance radiale entre le point 71 radialement le plus à l'intérieur de la structure annulaire de renforcement et la jante 6 de montage (en son point 151) étant désigné par A (voir figure 5).

Le pneumatique comporte également deux flancs 40 prolongeant les bourrelets radialement vers l'extérieur, les deux flancs 40 s'unissant dans un sommet comprenant une armature de sommet comportant deux nappes 80 et 90 surmontée d'une armature de frettage 100 et une bande de roulement 30.

Le pneumatique comporte en outre une armature de carcasse 60 s'étendant depuis les bourrelets 51,52 à travers les flancs 40 jusqu'au sommet. L'armature de carcasse 60 est ancrée dans les deux bourrelets par un retournement autour de la structure annulaire de renforcement 70, de manière à former dans chaque bourrelet un brin aller 62 et un brin retour 63. En l'occurrence, l'armature de carcasse 60 comporte en outre une deuxième couche 64 qui s'étend également depuis les bourrelets 51,52 à travers les flancs 40 jusqu'au sommet, mais qui n'est pas ancrée à la structure annulaire de renforcement 70 par un retournement.

La particularité du pneumatique selon l'invention consiste en ce qu'il comporte des bourrelets dissymétriques. Le premier bourrelet 51 a une épaisseur EB1 et le deuxième bourrelet 52 a une épaisseur EB2, les épaisseurs EB1 et EB2 étant définies comme la distance séparant (i) le point 69 (voir figure 5) du brin aller 62 de l'armature de carcasse 60 ayant une distance R dudit point 71 radialement le plus à l'intérieur de la structure annulaire de renforcement du bourrelet, où R = G + R1/2 - A, et (ii) le point 153 (voir figure 5) de la surface extérieure du bourrelet ayant cette même distance R dudit point 71 radialement le plus à l'intérieur de la structure annulaire de renforcement 70 du bourrelet, ces distances étant mesurées lorsque le pneumatique est monté sur ladite jante de montage 6 et gonflé à sa pression de service. Dans un pneumatique selon l'invention, la valeur absolue de la différence entre les épaisseurs EB1 et EB2 est supérieure ou égale à 1 mm : |EB1-EB2| ≥ 1 mm.

Lorsque plusieurs points du brin aller 62 de l'armature de carcasse 60 ont une distance R dudit point 71 radialement le plus à l'intérieur de la structure annulaire de renforcement du bourrelet, ledit point 69 est défini comme étant le point axialement le plus à l'intérieur de ces points.

Précisons que si les exemples représentés aux figures 3 et 4 correspondent à des pneumatiques dits « *run flat* » dont les flancs renforcés permettent un roulage même lorsque la pression de gonflage est faible ou nulle, l'invention n'est nullement limitée à ces pneumatiques et peut être implémentée sur tous les pneumatiques de tourisme.

La demanderesse a constaté qu'en utilisant des pneumatiques ayant des bourrelets 51,52 dissymétriques, on peut obtenir des déports de la bande de roulement par rapport au véhicule équivalents à ceux obtenus avec des cales d'une épaisseur de plusieurs millimètres. Comme cela a été dit plus haut, ce constat est inattendu car on se serait attendu à ce que la position du pneumatique par rapport à sa jante de montage soit avant tout déterminé par la géométrie de son armature de carcasse sous l'effet de la pression de gonflage, et que l'épaisseur des bourrelets ne joue pas de rôle prépondérant dans le positionnement axial de la bande de roulement.

Les figures 7 à 9 illustrent l'effet obtenu par l'utilisation d'un pneumatique selon l'invention.

A la figure 7, on a superposé les contours des pneumatiques représentés aux figures 3 (trait en pointillé) et 4 (trait continu). On constate que la dissymétrie des bourrelets provoque en effet un déport du sommet du pneumatique.

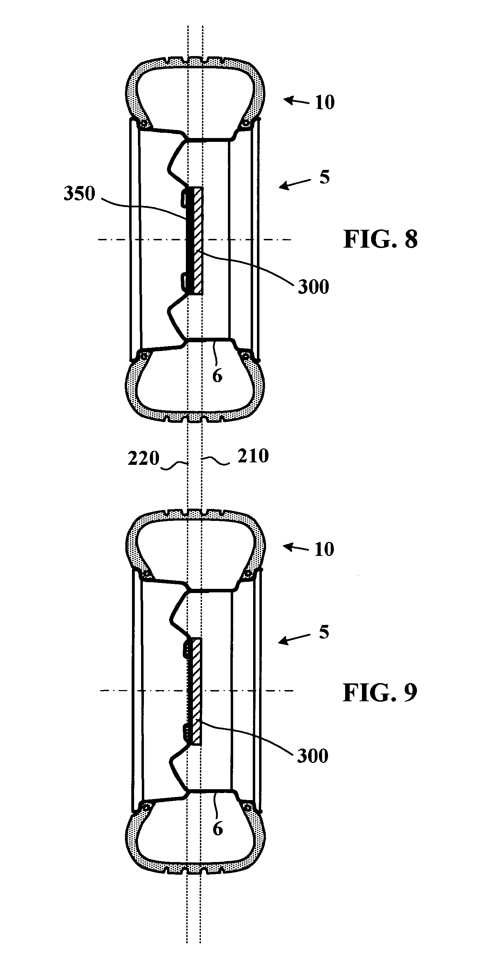

La figure 8 montre un ensemble pneumatique-roue de référence, où la roue 5 est séparée du moyeu 300 par une cale 350 de quelques millimètres pour obtenir un déport donné.

La figure 9 montre un ensemble pneumatique-roue selon l'invention, comportant un pneumatique tel que représenté à la figure 4. La roue 5 est ici directement fixée sur le moyeu 300, sans aucune cale. La dissymétrie des bourrelets provoque un déport sensiblement identique à celui obtenu avec la cale 350.

## Revendications

1. Pneumatique destiné à être monté sur une jante de montage (6) creuse conforme aux normes ETRTO et ayant un code diamètre supérieur ou égal à 10 et inférieur ou égal à 20 et des crochets de type « B » ou « J », avec une hauteur de crochet G et un rayon de courbure R1, et gonflé à l'aide d'un gaz de gonflage, ce pneumatique comportant
un premier et un deuxième bourrelet (51, 52), les deux bourrelets étant destinés à entrer en contact avec ladite jante de montage, chaque bourrelet ayant une surface extérieure (53), destinée à être en contact avec l'air atmosphérique, et une surface intérieure (54), destinée à être en contact avec le gaz de gonflage du pneumatique, chaque bourrelet comportant au moins une structure annulaire de renforcement (70), la structure annulaire de renforcement possédant, dans toute section radiale, au moins un point (71) radialement le plus à l'intérieur, la distance radiale entre le point (71) radialement le plus à l'intérieur de la structure annulaire de renforcement et la jante de montage étant désigné par A ;
deux flancs (40) prolongeant les bourrelets radialement vers l'extérieur, les deux flancs s'unissant dans
un sommet comprenant une armature de sommet (80,90) surmontée d'une bande de roulement (30) ;
une armature de carcasse (60) s'étendant depuis les bourrelets à travers les flancs jusqu'au sommet, l'armature de carcasse comportant une pluralité d'éléments de renforcement de carcasse (61) et ancrée dans les deux bourrelets par un retournement autour de la structure annulaire de renforcement, de manière à former dans chaque bourrelet un brin aller (62) et un brin retour (63) ;
dans lequel le premier bourrelet a une épaisseur EB1 et le deuxième bourrelet a une épaisseur EB2, les épaisseurs EB1 et EB2 étant définies comme la distance séparant
(i) le point (69) du brin aller de l'armature de carcasse ayant une distance R dudit point (71) radialement le plus à l'intérieur de la structure annulaire de renforcement du bourrelet, où R = G + R1/2 - A, et
(ii) le point (153) de la surface extérieure (53) du bourrelet ayant cette même distance R dudit point (71) radialement le plus à l'intérieur de la structure annulaire de renforcement du bourrelet, ces distances étant mesurées lorsque le pneumatique est monté sur ladite jante de montage et gonflé à sa pression de service,
**caractérisé en ce que** la valeur absolue de la différence entre les épaisseurs EB1 et EB2 est supérieure ou égale à 1 mm.

2. Pneumatique selon la revendication 1, dans lequel la différence entre les épaisseurs EB1 et EB2 est supérieure ou égale à 3 mm.

## Patentansprüche

1. Reifen, welcher dazu bestimmt ist, auf einer hohlen Montagefelge (6) montiert zu werden, die mit den ETRTO-Normen konform ist und einen Durchmessercode, der größer oder gleich 10 und kleiner oder gleich 20 ist, und Haken vom Typ "B" oder "J" aufweist, mit einer Hakenhöhe G und einem Krümmungsradius R1, und welcher mithilfe eines Aufpumpgases aufgepumpt ist, wobei dieser Reifen aufweist:
einen ersten und einen zweiten Wulst (51, 52), wobei die zwei Wülste dazu bestimmt sind, mit der Montagefelge in Kontakt zu kommen, wobei jeder Wulst eine Außenfläche (53), die dazu bestimmt ist, sich mit der atmosphärischen Luft in Kontakt zu befinden, und eine Innenfläche (54), die dazu bestimmt ist, sich mit der Aufpumpluft des Reifens in Kontakt zu befinden, aufweist, wobei jeder Wulst mindestens eine ringförmige Verstärkungsstruktur (70) aufweist, wobei die ringförmige Verstärkungsstruktur in jedem radialen Schnitt mindestens einen radial innersten Punkt (71) besitzt, wobei der radiale Abstand zwischen dem radial innersten Punkt (71) der ringförmigen Verstärkungsstruktur und der Montagefelge mit A bezeichnet ist;
zwei Seitenwände (40), welche die Wülste radial nach außen verlängern, wobei sich die zwei Seitenwände in
einem Scheitel treffen, der eine Scheitelbewehrung (80, 90) aufweist, über der sich ein Laufstreifen (30) befindet;
eine Karkassenbewehrung (60), die sich von den Wülsten aus durch die Seitenwände hindurch bis zum Scheitel erstreckt, wobei die Karkassenbewehrung mehrere Karkassenverstärkungselemente (61) aufweist und in den zwei Wülsten durch einen Umschlag um die ringförmige Verstärkungsstruktur verankert ist, derart, dass in jedem Wulst ein abgehender Abschnitt (62) und ein zurückführender Abschnitt (63) gebildet werden;
wobei der erste Wulst eine Dicke EB1 aufweist und der zweite Wulst eine Dicke EB2 aufweist, wobei die Dicken EB1 und EB2 als der Abstand definiert sind zwischen:
(i) dem Punkt (69) des abgehenden Abschnitts der Karkassenbewehrung, welcher einen Abstand R von dem radial innersten Punkt (71) der ringförmigen Verstärkungsstruktur des Wulstes aufweist, wobei R = G + R1/2 - A, und
(ii) dem Punkt (153) der Außenfläche (53) des Wulstes, welcher denselben Abstand R von dem radial innersten Punkt (71) der ringförmigen Verstärkungsstruktur des Wulstes aufweist, wobei diese Abstände gemessen werden, wenn der Reifen auf der Montagefelge montiert ist und bis zu seinem Betriebsdruck aufgepumpt ist,
**dadurch gekennzeichnet, dass** der absolute Betrag der Differenz zwischen den Dicken EB1 und EB2 größer als oder gleich 1 mm ist.

2. Reifen nach Anspruch 1, wobei die Differenz zwischen den Dicken EB1 und EB2 größer als oder gleich 3 mm ist.

## Claims

1. Tyre intended to be mounted on a drop-centre rim (6) in accordance with the ETRTO standards and having a diameter code greater than or equal to 10 and less than or equal to 20 and type "B" or "J" flanges, with a flange height G and a radius of curvature R1, and inflated with an inflating gas, this tyre comprising
a first and a second bead (51, 52), the two beads being intended to come into contact with the said mounting rim, each bead having an exterior surface (53), intended to be in contact with the atmospheric air, and an interior surface (54), intended to be in contact with the gas with which the tyre is inflated, each bead comprising at least one annular reinforcing structure (70), the annular reinforcing structure having, in any radial section, at least one radially innermost point (71), the radial distance between the radially innermost point (71) of the annular reinforcing structure and the mounting rim being denoted by A;
two sidewalls (40) extending the beads radially outwards, the two sidewalls meeting in
a crown comprising a crown reinforcement (80,90) surmounted by a tread (30);
a carcass reinforcement (60) extending from the beads through the sidewalls as far as the crown, the carcass reinforcement comprising a plurality of carcass reinforcing elements (61) and being anchored in the two beads by being turned back around the annular reinforcing structure so as to form, within each bead, a main strand (62) and a turned-back strand (63);
in which the first bead has a thickness EB1 and the second bead has a thickness EB2, the thicknesses EB1 and EB2 being defined as the distance separating
(i) the point (69) on the main strand of carcass reinforcement that is at a distance R from the said radially innermost point (71) of the annular reinforcing structure of the bead, where R = G + R1/2 - A, and
(ii) the point (153) on the exterior surface (53) of the bead that is at this same distance R from the said radially innermost point (71) of the annular reinforcing structure of the bead, these distances being measured when the tyre is mounted on the said mounting rim and inflated to its service pressure, **characterized in that** the absolute value of the difference between the thicknesses EB1 and EB2 is greater than or equal to 1 mm.

2. Tyre according to Claim 1, in which the difference between the thicknesses EB1 and EB2 is greater than or equal to 3 mm.
